# EUROPÄISCHE PATENTSCHRIFT

(11) **EP 4 347 330 B1**
(45) Veröffentlichungstag und Bekanntmachung des Hinweises auf die Patenterteilung: **16.07.2025**
(21) Anmeldenummer: 22729153.1
(22) Anmeldetag: 13.05.2022
(51) Int. Cl.: B60T 7/12

(54) **FAHRZEUGSYSTEM ZUR DURCHFÜHRUNG EINER BREMSUNG**
VEHICLE SYSTEM FOR CARRYING OUT A BRAKING
SYSTÈME POUR VÉHICULE POUR EFFECTUER UN FREINAGE

(30) Priorität: 02.06.2021 DE 102021205633
(43) Veröffentlichungstag der Anmeldung: 10.04.2024
(73) Patentinhaber: ZF Friedrichshafen AG, 88046 Friedrichshafen (DE)
(72) Erfinder: WOHLFARTH, Andreas, 88696 Owingen (DE); POLLAK, Martin, 88131 Lindau (DE); BAUR, Eva-Maria, 88085 Langenargen (DE); SALAMON, Frank, 88273 Fronreute (DE); KRZEMIEN, Roman, 88074 Meckenbeuren (DE)
(74) Vertreter: ZF Friedrichshafen AG
(86) Internationale Anmeldenummer: PCT/EP2022/063031
(87) Internationale Veröffentlichungsnummer: WO 2022/253554

(56) Entgegenhaltungen:
- DE-A1- 102009 002 815
- DE-A1- 102016 012 345
- DE-A1- 102019 210 339
- US-A1- 2006 232 124
- US-A1- 2015 353 062
- US-A1- 2018 001 890
- US-A1- 2021 094 577

## Beschreibung

Die Erfindung betrifft ein Fahrzeugsystem zur Durchführung einer Bremsung, das Fahrzeugsystem aufweisend ein erstes Sensorsystem zur Erfassung eines ersten Umfeldbildes eines Fahrzeugs und einer ersten Auswerteeinheit zum Auswerten des ersten Umfeldbildes hinsichtlich einer kritischen Bremssituation und ferner aufweisend ein zweites Sensorsystem zur Erfassung eines zweiten Umfeldbildes des Fahrzeugs und einer zweiten Auswerteeinheit, wobei das erste Umfeldbild und das zweite Umfeldbild zumindest einen großen Überlappungsbereich aufweisen, und wobei die erste Auswerteeinheit zur Erkennung einer kritischen Bremssituation aus dem ersten Umfeldbild und die zweite Auswerteeinheit zur Erkennung der kritischen Bremssituation aus dem zweiten Umfeldbild ausgebildet ist.

Ferner betrifft die Erfindung ein Fahrzeug und einen Zug.

Gerade bei hochautomatisierten Fahrzeugen ist es ein Problem, ob und in wieweit eine gegebene Situation oder ein Aspekt dieser Situation richtig erkannt worden ist. Ein Problem ist dabei, dass die Auswertung der Umfeldsensorik oftmals unterschiedlich ist oder nicht alle zur Verfügung stehenden Informationen richtig interpretiert werden können.

So können beispielsweise Objekte erkannt werden, welche nicht vorhanden sind. Eine solche fälschlicherweise erkannte Objekterkennung kann jedoch zu einer kritischen Bremsung führen, die bei Insassen oder nachfolgenden Fahrzeugen zu ernsthaften Schaden führen kann.

Im Stand der Technik werden daher beispielsweise ausgewertete Kameraaufnahmen nachfolgend von anderen Auswertungen überprüft, bevor eine Bremsung des beispielsweise autonom fahrenden Fahrzeugs eingeleitet wird.

Die DE 10 2016 012 345 A1 offenbart ein Verfahren zum Erkennen von Objekten im Umfeld eines Fahrzeugs, welches ein Objekterkennungssystem, umfassend zumindest eine Kamera, ein Bildverarbeitungsmodul, und einen Lidarsensor nutzt; wobei im ersten Schritt über das optische Erkennungssystem die Daten der Kamera erfasst und in dem Bildverarbeitungsmodul ausgewertet werden, um Objekthypothesen zu erhalten, wonach in einem zweiten Schritt die Objekthypothesen mittels des Lidarsensors überprüft werden, und wonach in einem dritten Schritt die Objekthypothesen als tatsächliche Objekte verifiziert oder als falsche Objekthypothese verworfen werden.

Die DE 10 2014 201 158A1 offenbart ein Verfahren zum Überprüfen eines von einer Objekterkennung für ein Fahrerassistenzsystem erkannten relevanten Objekts, wobei das Verfahren die folgenden Schritte umfasst: Einlesen einer Information über das relevante Objekt, wobei die Information eine von der Objekterkennung bereitgestellte Information repräsentiert; Einlesen eines Verdeckungssignals, das das Vorhandensein einer Verdeckung eines in Bezug zu dem relevanten Objekt stehenden weiteren relevanten Objekts innerhalb eines Sichtbereichs der Objekterkennung anzeigt; und Plausibilisieren der Information über das relevante Objekt unter Verwendung des Verdeckungssignals.

Die EP 2948349 B1 offenbart ein Verfahren zum Ermitteln eines Auslösekriteriums zur Ausgabe von Brems-Signalen in einem Fahrzeug, mit mindestens folgenden Schritten: Erfassen mindestens eines Objektes im Umfeld des Fahrzeugs, Ermitteln, ob das Fahrzeug mit dem Objekt auf einem Kollisionskurs ist, bei Ermittlung eines Kollisionskurses mit dem erfassten Objekt Überprüfung eines Ausweichkriteriums, das erfüllt ist, wenn kein Ausweichvorgang für das Fahrzeug ermittelbar oder möglich ist, zumindest bei Erfüllung des Ausweichkriteriums Überprüfen eines Bremskriteriums wobei das Auslösekriterium zur Ausgabe von Brems-Signalen erfüllt ist, wenn das Ausweichkriterium und das Bremskriterium erfüllt sind.

Die US 2018/001890 A1 offenbart ein Verfahren zum Implementieren eines Fahrzeugentscheidungssystems auf einem computerlesbaren Medium, das konfiguriert ist, um maschinenlesbare Befehle auf einem Prozessor auszuführen, wobei die Befehle umfassen: Sammeln von Daten von einer Vielzahl von Sensoren; Analysieren der Daten durch eine Vielzahl von Analysekomponenten; Umwandeln der analysierten Daten aus der Vielzahl von Analysekomponenten, um entsprechende standardisierte Metriken in einem Expertenbewertungssystem zu erzeugen; Zuweisen von Gewichtungen zu jeder standardisierten Metrik am Expertenbewertungssystem; Vergleichen einer Summe der gewichteten Metriken mit einem Schwellenwert, um eine Wahrscheinlichkeit des Auftretens eines Verkehrsmerkmals abzuschätzen; und Erzeugen einer Antwort an einem Fahrzeug, das dem Fahrzeugentscheidungssystem zugeordnet ist, basierend auf der geschätzten Wahrscheinlichkeit des Auftretens des Verkehrsmerkmals.

Es ist daher eine Aufgabe der Erfindung ein Fahrzeugsystem anzugeben, mit welchem eine unnötige Bremsung, vor allem eine kritische unnötige Bremsung, vermieden wird. Ferner ist es eine Aufgabe ein Fahrzeug und einen Zug anzugeben.

Die Aufgabe wird gelöst durch ein Fahrzeugsystem mit den Merkmalen des Anspruchs 1. Ferner wird die Aufgabe gelöst durch ein Fahrzeug mit den Merkmalen des Anspruchs 13 und einem Zug mit den Merkmalen des Anspruchs 14.

Vorteilhafte Weiterbildungen, welche einzeln oder in Kombination miteinander eingesetzt werden können, sind in den abhängigen Ansprüchen sowie in der Beschreibung angegeben.

Die Aufgabe wird gelöst durch ein Fahrzeugsystem zur Durchführung einer Bremsung eines Fahrzeugs, das Fahrzeugsystem aufweisend ein erstes Sensorsystem zur Erfassung eines ersten Umfeldbildes des Fahrzeugs und einer ersten Auswerteeinheit zum Auswerten des ersten Umfeldbildes hinsichtlich einer kritischen Bremssituation und ferner aufweisend ein zweites, von dem ersten Sensorsystem unabhängigen, Sensorsystem zur Erfassung eines zweiten Umfeldbildes des Fahrzeugs und einer zweiten Auswerteeinheit, wobei das erste Umfeldbild und das zweite Umfeldbild zumindest einen großen Überlappungsbereich aufweisen, wobei
die erste Auswerteeinheit zur Erkennung einer kritischen Bremssituation aus dem ersten Umfeldbild ausgebildet ist und die zweite Auswerteeinheit zur Erkennung der kritischen Bremssituation aus dem zweiten Umfeldbild ausgebildet ist, und wobei das Fahrzeugsystem dazu ausgebildet ist, bei Erkennung einer kritischen Bremssituation aus dem ersten Umfeldbild eine Bremsung mit einer ersten Bremskraft und bei Erkennung der kritischen Bremssituation aus dem zweiten Umfeldbild eine Bremsung mit einer zweiten Bremskraft zu bewerkstelligen und
bei Erkennung der kritischen Bremssituation aus dem ersten Umfeldbild als auch gleichzeitig aus dem zweiten Umfeldbild eine Bremsung mit einer dritten Bremskraft zu bewerkstelligen,
wobei die dritte Bremskraft höher als die zweite Bremskraft und die erste Bremskraft ist.

Dabei zeigt bevorzugt das erste und das zweite Umfeldbild einen identischen Umfeldausschnitt, d.h. das erste Sensorsystem und das zweite Sensorsystem nehmen den gleichen oder im Wesentlichen das gleiche Umfeld des Fahrzeugs auf.

Ein Sensorsystem kann ein einzelner Sensor oder ein Sensorarray sein.

Eine kritische Bremssituation liegt beispielsweise vor, wenn ein Abstand zu einem vorausliegenden Objekt unterhalb eines vorbestimmten Abstands fällt. Zudem kann die Bremssituation eine Situation sein, in der ein vorausfahrendes Fahrzeug einen schnellen und starken Bremsvorgang ausführt oder eine Situation sein, in der ein plötzlich auftauchendes Objekt (Fußgänger) den Fahrweg kreuzt. Ferner können kritische Bremssituationen nicht selbst verschuldetes Fehlverhalten (z.B. Vorfahrtsfehler anderer) beinhalten.

Es wurde erkannt, dass der bisherige Stand der Technik lediglich eine Überprüfung ob und inwieweit Objekte, d.h. eine Bremssituation sicher erkannt wurde, erfolgt. Erst wenn das Objekt oder eine Bremssituation sicher anhand der Überprüfung erkannt wird, erfolgt im Stand der Technik eine Bremsung.

Erfindungsgemäß erfolgt anhand des Fahrzeugsystems eine gestufte Bremsung. Mittels der Erfindung wird durch gestufte Reaktion eine Auflösung des Konflikts der Sicherheitsziele erzielt: jede Erkennung führt zu einer Reaktion; jedoch ist die Reaktion, d.h. die Bremsung unterschiedlich. Eine Bremsung mit einer ersten oder zweiten Bremskraft führt zu einer reduzierten Bremsung. Diese ist jedoch vorzugsweise ungefährlich für die Insassen und nachfolgenden Verkehr. Eine Erkennung einer kritischen Bremssituation in beiden Umfeldbildern durch die unabhängigen Sensorsysteme führt jedoch zu einer verstärkten, vorzugsweise maximalen Systemreaktion, d.h. einer Bremsung mit hoher Bremskraft.

Durch das erfindungsgemäße Fahrzeugsystem wird eine zu starke Verzögerung, welche gefährlich für Passagiere und den nachfolgenden Verkehr ist, vermieden, jedoch gleichzeitig eine Kollision durch Nicht-Bremsung und beispielsweise ein Auffahren auf vorausliegende Objekte / Fahrzeuge / Fußgänger vermieden, da jede Erkennung einer kritischen Bremssituation in zumindest einem Sensorsystem zu einer Reaktion führt.

Durch das erfindungsgemäße Fahrzeugsystem kann eine sichere Bremsung in einer kritischen Bremssituation sichergestellt werden, auch wenn nur zwei Sensorsysteme verfügbar sind.

Durch das erfindungsgemäße Fahrzeugsystem kann eine funktionale Sicherheit gemäß SOTIF (Safety Of The Intended Functionality) erfüllt werden. Das erfindungsgemäße Fahrzeugsystem kann eine Sicherheit gegen Fehlfunktionen bieten.

In weiterer Ausgestaltung sind die erste Auswerteeinheit und die zweite Auswerteeinheit zur parallelen Verarbeitung ausgebildet, so dass die erste Auswerteeinheit eine vorhandene Bremssituation aus dem ersten Umfeldbild und die zweite Auswerteeinheit die vorhandene Bremssituation aus dem zweiten Umfeldbild parallel erkennt.

Dadurch wird die statistische Validierbarkeit extrem verkürzt, da eine Aufteilung der nachzuweisenden Ziele möglich ist. Durch die parallele Verarbeitung ist auch eine sehr schnelle Reaktion bei Erkennung einer kritischen Bremssituation möglich. Selbst wenn eines der Sensorsysteme noch keine kritische Bremssituation erkennt, kann somit durch das Fahrzeugsystem schon eine Bremsung eingeleitet werden, wenn das andere der Sensorsysteme eine kritische Bremssituation erkennt. Wird dann beispielsweise noch vom anderen Sensorsystem eine kritische Bremssituation erkannt, kann dann beispielsweise eine Bremsung mit maximaler Bremskraft erfolgen.

Durch die parallele Verarbeitung kann ebenfalls eine Echtzeitreaktion und Echtzeitverarbeitung erfolgen.

Ferner ist in weiterer Ausgestaltung die erste Bremskraft gleich der zweiten Bremskraft. Dadurch können beide Sensorsysteme gleichgestellt werden.

In weiterer Ausgestaltung beruhen das erste Sensorsystem und das zweite Sensorsystem auf unterschiedlichem Messprinzip. Dadurch kann weiter die Sicherheit eines Erkennens einer kritischen Bremssituation durch die verschiedenen Messprinzipien erhöht werden. So können beispielsweise einige Messprinzipien sehr sicher ein Objekt und damit verbunden eine kritische Bremssituation bei näherer Entfernung erfassen, während andere beispielsweise bei Nacht- oder Regen/Schneefall Vorteile bieten.

In weiterer Ausgestaltung ist das Fahrzeugsystem dazu ausgebildet, bei der dritten Bremskraft eine Gefahrenbremsung durchzuführen. Dabei wird eine Gefahrenbremsung auch als Vollbremsung/Notbremsung bezeichnet. Bei einer solchen Gefahrenbremsung ist es das Ziel, dass alle vier Räder die bestmögliche und schnellstmögliche Verzögerung erreichen und somit das Fahrzeug in kürzester Zeit zum Stillstand bringen. Dadurch kann die Kollisionswahrscheinlichkeit des Fahrzeugs mit einem Objekt oder mit anderen Fahrzeugen möglichst rasch gesenkt werden.

In weiterer Ausgestaltung kann das Fahrzeugsystem dazu ausgebildet sein, bei einer Gefahrenbremsung eine Gefahrenwarnung auszugeben. Diese kann beispielsweise eine akustische und/oder optische Fahrzeuginsassenwarnung sein oder auch eine optische und akustische Warnung, welche das Fahrzeug an sein Umfeld abgibt.

Dadurch, können beispielsweise in einem Bus die Businsassen oder Zug die Zuginsassen gewarnt werden oder in einem Fahrzeug die Fahrzeuginsassen, so dass diese sich auf eine starke Bremsung vorbereiten können.

Die Gefahrenbremsung kann von einem Bremsassistenzsystem automatisch gesteuert werden, um das Fahrzeug mit einer maximalen Bremskraft abbremsen zu können.

In weiterer Ausgestaltung ist das Fahrzeugsystem dazu ausgebildet, bei Vorliegen einer zweiten Bremskraft oder ersten Bremskraft eine Zwangsbremsung durchzuführen. Diese ausgelöste Zwangsbremsung führt zu einer schnellen und starken Bremsung, bei der jedoch keine Fahrzeuginsassen geschädigt werden, d.h. zu einer schwächeren Bremsung und führt nicht zu einem Stillstand des Fahrzeugs innerhalb kürzester Zeit, wie dies bei einer Gefahrenbremsung der Fall ist.

In weiterer Ausgestaltung kann das erste Sensorsystem als Radarsensorsystem und das zweite Sensorsystem als Lidarsensorsystem ausgebildet sein. Diese Sensorsysteme können eine zuverlässige Erkennung liefern, auch bei ungünstigen Bedingungen. Zudem können Objekte in Radardaten und Lidardaten schnell erkannt werden.

In weiteren Ausgestaltungen können auch andere Sensortechnologien zum Einsatz kommen, z.B. Kamerasensoren, Ultraschallsensoren oder andere schallbasierte Technologien wie Echoortung. Hierbei sind beliebige Kombinationsmöglichkeiten der Sensortechnologien möglich.

In weiterer Ausbildung ist ein Diagnosesystem vorgesehen, zur Überprüfung der korrekten Funktionsweise des ersten und des zweiten Sensorsystems und Erstellung einer Diagnose anhand der Überprüfung, wobei das Fahrzeugsystem dazu ausgebildet ist, die Diagnose bei Durchführung einer Bremsung anhand der Erkennung einer Bremssituation durch die beiden Sensorsysteme zu berücksichtigen.

Die Erkennung der Bremssituation durch die Sensorsysteme kann gestuft erfolgen. Zum Bespiel in einer ersten Stufe erfolgt keine Bremsung bei Erkennung keiner Kollision bzw. Gefahr. In einer zweiten Stufe bei Erkennung einer gerade noch vermeidbaren Kollision wird eine Bremsung mit einer zweiten Bremskraft durchgeführt. In einer dritten Stufe bei Erkennung einer unvermeidbaren Kollision wird eine Bremsung mit einer dritten Bremskraft durchgeführt.

Anhand eines solchen Diagnosesystems kann eine Störung und/oder ein Fehler und/oder ein Ausfall eines der beiden oder beider Sensorsysteme berücksichtigt werden.

Somit können Fehler bei der Auswertung oder einer fehlerhaften Erkennung / Nichterkennung berücksichtigt werden. Dies erhöht die sichere Betriebsweise, insbesondere eines autonom fahrenden Fahrzeugs.

In weiterer Ausbildung ist bei einer Detektion von einer Störung und/oder eines Ausfalls beider Sensorsysteme durch das Diagnosesystem und bei Feststellen einer kritischen Bremssituation durch zumindest eines der beiden Sensorsysteme, das Fahrzeugsystem dazu ausgebildet, eine Bremsung mit der dritten Bremskraft zu bewerkstelligen. Dadurch wird dem Rechnung getragen, dass durch das fehlerhafte Sensorsystem, welches keine Bremssituation erkannt hat, diese nicht mehr erkennen konnte. Dadurch wird die Sicherheit für Fahrzeuginsassen, aber auch insbesondere für andere Verkehrsteilnehmer erhöht.

In weiterer Ausgestaltung ist bei einer Detektion von einer Störung und/oder eines Ausfalls eines der beiden Sensorsysteme und bei Feststellen einer kritischen Bremssituation durch beide Sensorsysteme, das Fahrzeugsystem dazu ausgebildet, eine Bremsung mit der dritten Bremskraft zu bewerkstelligen.

Ferner kann bei einer Detektion von einer Störung und/oder eines Ausfalls eines der beiden Sensorsysteme und bei Feststellen einer fehlenden kritischen Bremssituation durch beide Sensorsysteme, das Fahrzeugsystem dazu ausgebildet sein, eine Bremsung mit der ersten oder zweiten Bremskraft zu bewerkstelligen. Dadurch wird dem Rechnung getragen, dass das fehlerhafte Sensorsystem ggf. eine kritische Bremssituation hätte erkennen können, bei richtiger Funktionsweise. Dadurch wird die Sicherheit für Fahrzeuginsassen, aber auch insbesondere für andere Verkehrsteilnehmer erhöht.

Ferner ist vorzugsweise bei einer Detektion von einer Störung und/oder eines Ausfalls eines der beiden Sensorsysteme und bei Feststellen einer kritischen Bremssituation durch zumindest das nicht ausgefallene Sensorsystem, das Fahrzeugsystem dazu ausgebildet, eine Bremsung mit der dritten Bremskraft zu bewerkstelligen. Dadurch wird dem Rechnung getragen, dass das fehlerhafte Sensorsystem ggf. ebenfalls die kritische Bremssituation hätte erkennen können, bei richtiger Funktionsweise. Dadurch wird die Sicherheit für Fahrzeuginsassen, aber auch insbesondere für andere Verkehrsteilnehmer erhöht.

Ferner wird die Aufgabe gelöst durch ein Fahrzeug mit einem wie oben beschriebenen Fahrzeugsystem. Das Fahrzeug kann insbesondere ein autonom betriebenes Fahrzeug sein, beispielsweise ein Bus, bei dem mehrere Fahrzeuginsassen vorhanden sind. Dadurch kann beispielsweise eine unnötige Gefahrenbremsung unter Einhaltung maximaler Sicherheitskriterien für andere Verkehrsteilnehmer vermieden werden.

Ferner wird die Aufgabe gelöst durch einen Zug mit einem wie oben beschriebenen Fahrzeugsystem. Insbesondere eignet sich das Fahrzeugsystem für Züge oder schienenbetriebene Fahrzeuge. Diese transportieren ebenfalls mehrere Fahrzeuginsassen.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein Fahrzeugsystem gemäß dem Stand der Technik, und
FIG 2: ein erfindungsgemäßes Fahrzeugsystem schematisch in einer ersten Ausgestaltung, und
FIG 3: das erfindungsgemäße Fahrzeugsystem schematisch in einer zweiten Ausgestaltung, und
FIG 4: eine Tabelle mit möglichen Diagnosen.

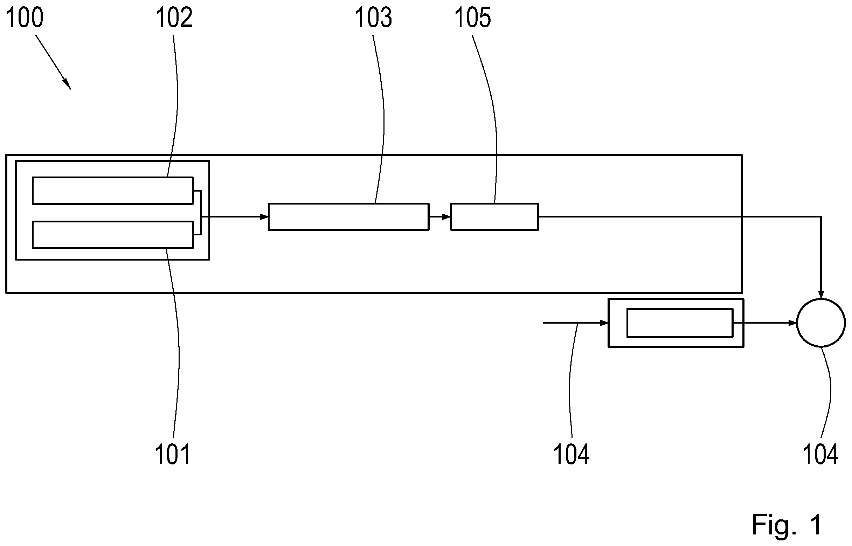

FIG 1 zeigt ein Fahrzeugsystem 100 in einem Fahrzeug gemäß dem Stand der Technik. Dieses weist einen ersten Sensor 101 und einen zweiten Sensor 102 auf. Der erste Sensor 101 nimmt ein Umfeldbild auf. Der zweite Sensor 102 nimmt ebenfalls ein Umfeldbild auf. Anschließend wird beispielsweise eine kritische Bremssituation von dem ersten Sensor 101 erkannt. Diese wird durch den zweiten Sensor 102 überprüft. Ist die Überprüfung positiv, so wird eine Gefahrenbremsung bzw. Notfallbremsung 103 eingeleitet und durchgeführt 105, wodurch die normale beispielsweise autonome Betriebsweise 104 überstimmt wird.

Eine kritische Bremssituation liegt beispielsweise dann vor, wenn ein Abstand zu einem vorausliegenden Objekt unterhalb eines vorbestimmten Abstands fällt. Ferner kann die Bremssituation eine Situation sein, in der ein vorausfahrendes Fahrzeug einen schnellen und starken Bremsvorgang ausführt oder eine Situation sein, in der ein plötzlich auftauchendes Objekt (Fußgänger) den Fahrweg kreuzt. Ferner können kritische Bremssituationen nicht selbst verschuldetes Fehlverhalten (z.B. Vorfahrtsfehler anderer) beinhalten.

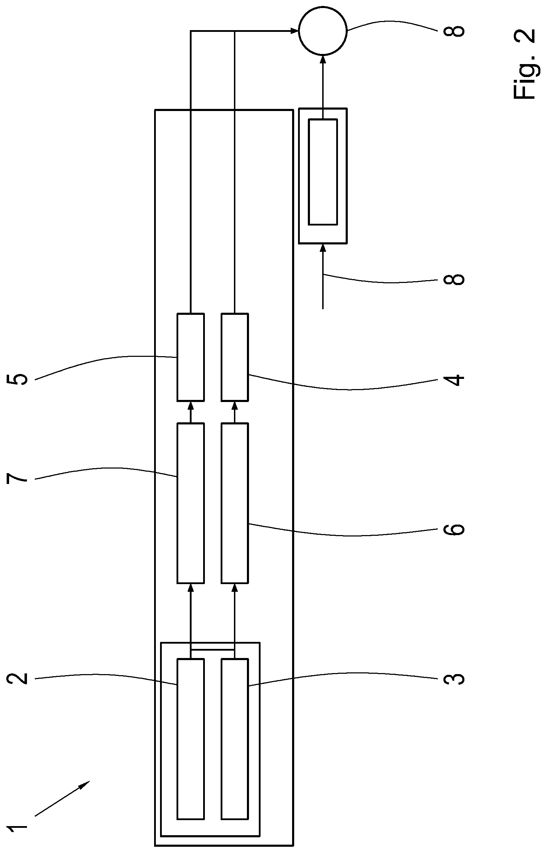

FIG 2 zeigt ein erfindungsgemäßes Fahrzeugsystem 1 in einer ersten Ausgestaltung. Dieses weist ein erstes Sensorsystem 2 auf, welches hier aus einem Lidarsensor besteht oder mehrere umfasst. Ferner weist das Fahrzeugsystem 1 noch ein weiteres, zu dem ersten Sensorsystem 2 unabhängiges zweites Sensorsystem 3 auf.

Das zweite Sensorsystem 3 besteht aus einem Radarsensor oder umfasst mehrere Radarsensoren. Dabei ist es vorteilhaft, wenn das erste Sensorsystem 2 und das zweite Sensorsystem 3 aus Sensoren mit unterschiedlichen Messprinzipien besteht, da eine sicherere Erkennung beispielsweise eines vorausliegenden Objektes möglich ist. Jedoch können diese auch auf dem gleichen Messprinzip beruhen. Insbesondere ist es von Vorteil, wenn die Messprinzipien zum einem auf Lidartechnik und Radartechnik beruhen, da aus diesen zuverlässig und schnell Objekte und somit eine Bremssituation erkannt werden kann.

Das erste Sensorsystem 2 nimmt die Fahrzeugumgebung als erstes Umfeldbild auf und das zweite Sensorsystem 3 nimmt die Fahrzeugumgebung als zweites Umfeldbild auf. Dabei zeigen das erste Umfeldbild und das zweite Umfeldbild vorzugsweise identische Fahrzeugumgebungen oder weisen eine große Überlappung auf. Ferner ist eine erste Auswerteeinheit vorgesehen, zur Erkennung einer kritischen Bremssituation im ersten Umfeldbild. Die erste Auswerteeinheit kann in dem ersten Sensorsystem selber angeordnet sein und als Software ausgebildet sein.

Ferner ist eine zweite Auswerteeinheit vorgesehen, zur Erkennung der kritischen Bremssituation im zweiten Umfeldbild. Die zweite Auswerteeinheit kann in dem zweiten Sensorsystem selber angeordnet sein und als Software ausgebildet sein.

Ferner ist das Fahrzeugsystem 1 dazu ausgebildet, bei Erkennung einer kritischen Bremssituation aus dem ersten Umfeldbild eine Bremsung mit einer ersten Bremskraft 6 und einer Erkennung der kritischen Bremssituation aus dem zweiten Umfeldbild eine Bremsung mit einer zweiten Bremskraft 6 zu bewerkstelligen.

Dabei ist die erste Bremskraft 6 und die zweite Bremskraft 6 vorzugsweise identisch.

Mittels der ersten Bremskraft 6 und der zweiten Bremskraft 6 wird eine Zwangsbremsung 4 ausgelöst, welche zu einer schnellen und starken Bremsung führt. Bei dieser Art der Bremsung wird eine schnelle Bremsung herbeigeführt, bei der jedoch keine Fahrzeuginsassen geschädigt werden, d.h. diese führt zu einer schwächeren Bremsung, welche nicht zu einem Stillstand des Fahrzeugs innerhalb kürzester Zeit führt, wie dies bei einer Gefahrenbremsung 5 der Fall ist.

Ferner ist das Fahrzeugsystem 1 dazu ausgebildet, bei Erkennung der kritischen Bremssituation aus dem ersten Umfeldbild als auch gleichzeitig aus dem zweiten Umfeldbild eine Bremsung mit einer dritten Bremskraft 7 zu bewerkstelligen, wobei die dritte Bremskraft 7 höher als die zweite Bremskraft 6 und die erste Bremskraft 6 ist.

Dabei erfolgt die Auswertung des ersten Umfeldbildes als auch des zweiten Umfeldbildes parallel. Dadurch kann separat bereits bei Vorliegen einer Erkennung zumindest ein Bremsen mit einer ersten oder zweiten Bremskraft 6 eingeleitet werden.

Dadurch ist eine Echtzeitreaktion möglich. Ferner ist durch die parallele Auswertung eine schnellere Reaktion möglich.

Dabei ist die dritte Bremskraft 7 vorzugsweise als Gefahrenbremsung 5 (Vollbremsung) ausgestaltet. Dabei wird das Fahrzeug innerhalb der möglichst kürzesten Zeit zum Stillstand (maximale Bremsreaktion) gebracht. Dadurch kann die Kollisionswahrscheinlichkeit des Fahrzeugs mit einem Objekt oder mit anderen Fahrzeugen möglichst rasch gesenkt werden. Eine solche Gefahrenbremsung 5 ist jedoch auch für die Fahrzeuginsassen belastend.

Ferner kann das Fahrzeugsystem 1 dazu ausgebildet sein, bei Durchführen einer solchen Gefahrenbremsung 5 eine akustische und optische Warnung sowohl an die Fahrzeuginsassen als auch an die nachfolgenden Fahrzeuge auszugeben. Dadurch können sich die Fahrzeuginsassen auf beispielsweise einen starken Ruck vorbereiten und die nachfolgenden Fahrzeuge beispielsweise selber eine starke Bremsung einleiten, um einen Auffahrunfall zu verhindern.

Durch das erfindungsgemäße Fahrzeugsystem 1 wird ein Konflikt zwischen Sicherheitszielen, nämlich einer Gefahrenbremsung 5 und überhaupt keiner Bremsung gelöst, durch eine gestufte Reaktion. Dadurch wird eine zu starke Verzögerung bei der Bremsung, welche gefährlich für Passagiere und den nachfolgenden Verkehr sind, vermieden. Gleichzeitig wird ein Nicht-Bremsen vermieden, welches zur Kollision auf vorhandene Objekte führen kann.

Durch das erfindungsgemäße Fahrzeugsystem 1 wird eine Auflösung des Konflikts der Sicherheitsziele durch eine gestufte Bremsreaktion gelöst. Jede Erkennung führt zu einer (unterschiedlichen) Bremsreaktion.

Selbst quasi eine erste Stufe, nämlich die Erkennung einer kritischen Bremssituation in nur einem einzelnen Umfeldbild führt zu einer Systemreaktion, nämlich zu einer reduzierten, schnellen Bremsung, welche jedoch ungefährlich für Insassen und den nachfolgenden Verkehr ist, jedoch eine Kollision verhindern oder reduzieren kann.

Die quasi zweite Stufe, nämlich die Erkennung einer kritischen Bremssituation in beiden Umfeldbildern durch beide Sensorsysteme 2,3 bzw. deren Auswerteeinheiten führt zu einer maximalen Systemreaktion, nämlich einer Gefahrenbremsung 5 oder einer sehr hohen Bremsung.

Durch die parallele Verarbeitung der beiden Umfeldbilder wird die statistische Validierbarkeit extrem verkürzt, da eine Aufteilung der nachzuweisenden Ziele möglich ist.

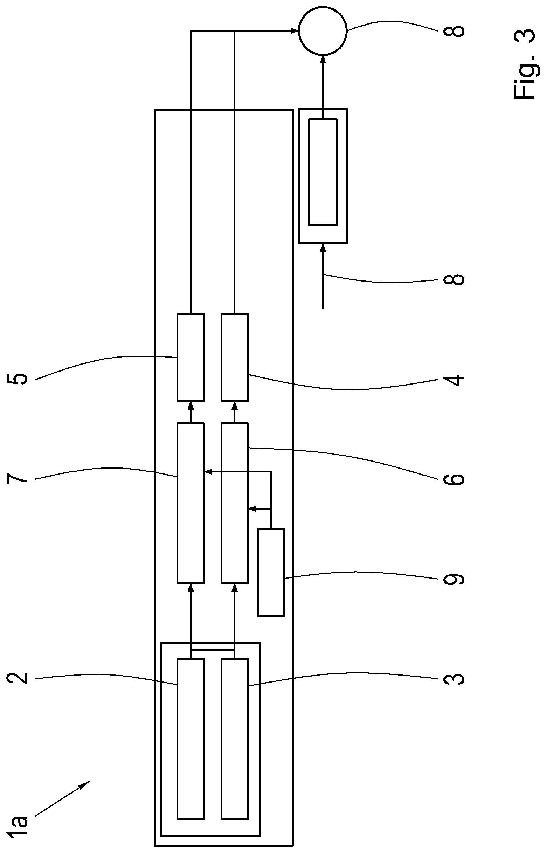

Durch das Vorhandensein einer Gefahrenbremsung 5 oder Zwangsbremsung 4 wird die normale, beispielsweise autonome, Betriebsweise 8 des Fahrzeugs überstimmt. FIG 3 zeigt eine weitere Ausgestaltung eines erfindungsgemäßen Fahrzeugsystems 1a. Dieses weist wie das erste Fahrzeugsystem 1 das erstes Sensorsystem 2, und das unabhängige zweite Sensorsystem 3 auf.

Das erste Sensorsystem 2 nimmt die Fahrzeugumgebung als erstes Umfeldbild auf und das zweite Sensorsystem 3 nimmt die Fahrzeugumgebung als zweites Umfeldbild auf.

Ferner ist auch das Fahrzeugsystem 1a dazu ausgebildet, bei Erkennung einer kritischen Bremssituation aus dem ersten Umfeldbild eine Bremsung mit einer ersten Bremskraft 6 und bei einer Erkennung der kritischen Bremssituation aus dem zweiten Umfeldbild eine Bremsung mit einer zweiten Bremskraft 6 zu bewerkstelligen. Mittels der ersten Bremskraft 6 und der zweiten Bremskraft 6 wird eine Zwangsbremsung 4 ausgelöst.

Ferner ist das Fahrzeugsystem 1a dazu ausgebildet, bei Erkennung der kritischen Bremssituation aus dem ersten Umfeldbild als auch gleichzeitig aus dem zweiten Umfeldbild eine Bremsung mit einer dritten Bremskraft 7 zu bewerkstelligen, wobei die dritte Bremskraft 7 höher als die zweite Bremskraft 6 und die erste Bremskraft 6 ist.

Dabei ist die dritte Bremskraft 7 vorzugsweise als Gefahrenbremsung 5 (Vollbremsung) ausgestaltet. Dabei wird das Fahrzeug innerhalb der möglichst kürzesten Zeit zum Stillstand (maximale Bremsreaktion) gebracht.

Ferner weist das Fahrzeugsystem 1a noch ein Diagnosesystem 9 auf.

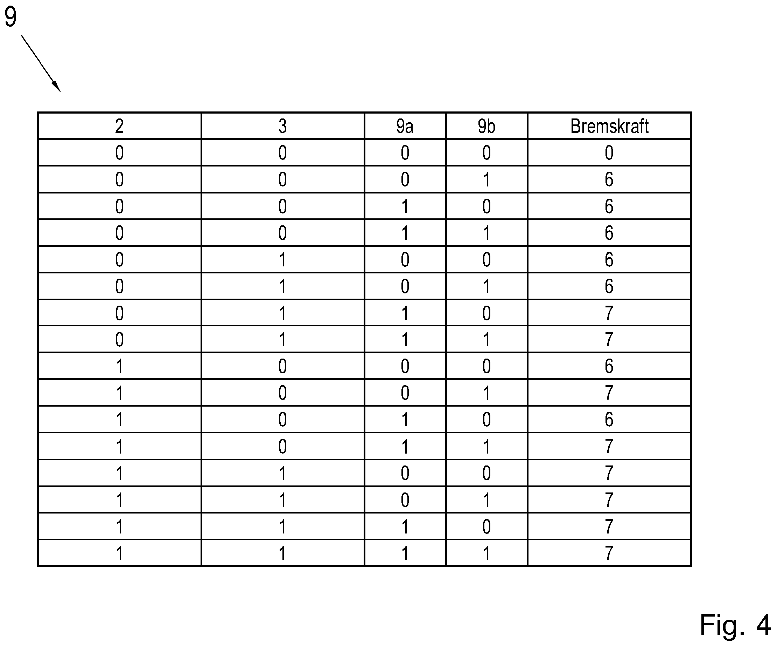

In FIG 4 ist eine Tabelle mit möglichen Diagnosen 9a,9b beschrieben.

Das Diagnosesystem 9 ist zur Überprüfung der korrekten Funktionsweise des ersten Sensorsystems 2 und des zweiten Sensorsystems 3 vorgesehen.

Das Diagnosesystem 9 kann eine Diagnose 9a für das erste Sensorsystem 2 und eine Diagnose 9b für das zweite Sensorsystem 3 erstellen.

Eine solche Diagnose kann beispielsweise eine Störung und/oder ein Fehler und/oder ein Ausfall eines der Sensorsysteme 2,3 oder beider Sensorsysteme 2,3 sein.

Ferner ist das Fahrzeugsystem dazu ausgebildet, eine Diagnose 9a,9b bei Durchführung einer Bremsung anhand der Erkennung einer Bremssituation durch die beiden Sensorsysteme 2,3 zu berücksichtigen.

Somit können Fehler bei der Auswertung oder fehlerhafte Erkennungen / Nichterkennungen berücksichtigt werden. Dieses erhöht die sichere Betriebsweise, insbesondere eines autonom fahrenden Fahrzeugs.

Nachfolgend werden in der Tabelle verschiedene Diagnosen 9a, 9b sowie deren Auswirkungen gezeigt.

Dabei sind in den ersten zwei Spalten die beiden Sensorsysteme 2,3 angegeben.

Eine "0" in den Spalten der Sensorsysteme 2,3 bedeutet dabei, dass keine Bremssituation erkannt worden ist, eine "1" dass eine Bremssituation erkannt worden ist.

Ist in der Spalte 9a eine "1", so bedeutet dies, dass im Sensorsystem 2 eine Störung/Ausfall etc. erkannt worden ist. Ist in der Spalte 9b eine "1" so bedeutet dies, dass im Sensorsystem 3 eine Störung/Ausfall etc. erkannt worden ist.

Ist in der Spalte 9a/9b eine "0" so bedeutet dies, dass im Sensorsystem 2/3 keine Störung/Ausfall etc. erkannt worden ist.

Wird sowohl in den beiden Sensorsystemen 2,3 keine Bremssituation erkannt (0,0) und ist als Diagnose 9a,9b (0,0) keine Störung erkannt, so wird mit einer Bremskraft von 0 gebremst, das heißt das Fahrzeug setzt seinen autonomen Betrieb normal fort.

Wird sowohl in den beiden Sensorsystemen 2,3 keine Bremssituation erkannt (0,0) ist aber einer der beiden Diagnosen 9a,9b als eine Störung erkannt (9a=0, 9b=1) oder (9a=1, 9b=0) worden oder sind beide Diagnosen 9a,9b als eine Störung erkannt worden (9a=1, 9b=1), so wird mit einer Zwangsbremsung 4, d. h. mit einer ersten oder zweiten Bremskraft 6 gebremst.

Dadurch wird dem Rechnung getragen, dass durch das fehlerhafte Sensorsystem, welches keine Bremssituation erkannt hat, diese nicht mehr erkennen konnte. Dadurch wird die Sicherheit für Fahrzeuginsassen, aber auch insbesondere für andere Verkehrsteilnehmer erhöht.

Ist lediglich in dem zweiten Sensorsystem 3 eine Bremssituation erkannt (0,1) worden, aber als zweite Diagnose 9b eine Störung erkannt worden (9a=0, 9b=1) oder als erste Diagnose 9a und zweite Diagnose 9b keine Störung erkannt (9a=0, 9b=0) worden, so wird mit einer Zwangsbremsung 4, d. h. mit einer ersten oder zweiten Bremskraft 6 gebremst.

Ist lediglich in dem zweiten Sensorsystem 3 eine Bremssituation erkannt (0,1) worden, aber als erste Diagnose 9a eine Störung erkannt worden (9a=1, 9b=0) oder beide Diagnosen 9a, 9b als eine Störung erkannt worden (9a=1, 9b=1), so wird mit einer Gefahrenbremsung 5, d. h. mit einer dritten Bremskraft 7 gebremst.

Ist lediglich in dem ersten Sensorsystem 2 eine Bremssituation erkannt (1,0) worden aber als beide Diagnosen 9a, 9b keine Störung erkannt worden (9a=0, 9b=0), so wird mit einer Zwangsbremsung 4, d. h. mit einer ersten oder zweiten Bremskraft 6 gebremst.

Ist lediglich in dem ersten Sensorsystem 2 eine Bremssituation erkannt (1,0) worden aber als zweite Diagnosen 9b eine Störung erkannt worden (9a=0, 9b=1), so wird mit einer Gefahrenbremsung 5, d. h. mit einer dritten Bremskraft 7 gebremst.

Ist lediglich in dem ersten Sensorsystem 2 eine Bremssituation erkannt (1,0) worden, aber als erste Diagnose 9a eine Störung erkannt worden (9a=1, 9b=0), so wird mit einer Zwangsbremsung 4, d. h. mit einer ersten oder zweiten Bremskraft 6 gebremst.

Ist lediglich in dem ersten Sensorsystem 2 eine Bremssituation erkannt (1,0) worden, aber als beide Diagnosen 9a,9b eine Störung erkannt worden (9a=1, 9b=1), so wird mit einer Gefahrenbremsung 5, d. h. mit einer dritten Bremskraft 7 gebremst.

Ist in beiden Sensorsystemen 2,3 eine Bremssituation erkannt (1,1)worden, aber als beide Diagnosen 9a,9b eine Störung erkannt worden (9a=1, 9b=1), oder nur als erste Diagnose 9a eine Störung erkannt worden (9a=1, 9b=0), oder aber nur als zweite Diagnose 9b eine Störung erkannt worden (9a=0, 9b=1), oder aber als beide Diagnosen 9a, 9b keine Störung erkannt worden (9a=0, 9b=0), so wird mit einer Gefahrenbremsung 5, d. h. mit einer dritten Bremskraft 7 gebremst.

Dadurch wird dem Rechnung getragen, dass das fehlerhafte Sensorsystem ggf. ebenfalls die kritische Bremssituation hätte erkennen können, bei richtiger Funktionsweise. Dadurch wird die Sicherheit für Fahrzeuginsassen, aber auch insbesondere für andere Verkehrsteilnehmer erhöht.

### Bezugszeichen

- 1,1a: Fahrzeugsystem
- 2: erstes Sensorsystem
- 3: zweites Sensorsystem
- 4: Zwangsbremsung
- 5: Gefahrenbremsung
- 6: erste/zweite Bremskraft
- 7: dritte Bremskraft
- 8: autonome Betriebsweise
- 9: Diagnosesystem
- 9a: Diagnose des ersten Sensorsystems
- 9b: Diagnose des zweiten Sensorsystems

## Patentansprüche

1. Fahrzeugsystem (1,1a) zur Durchführung einer Bremsung eines Fahrzeugs, das Fahrzeugsystem (1,1a) aufweisend ein erstes Sensorsystem (2) zur Erfassung eines ersten Umfeldbildes eines Fahrzeugs und einer ersten Auswerteeinheit zum Auswerten des ersten Umfeldbildes hinsichtlich einer kritischen Bremssituation und ferner aufweisend ein zweites, von dem ersten Sensorsystem (2) unabhängigen, Sensorsystem (3) zur Erfassung eines zweiten Umfeldbildes des Fahrzeugs und einer zweiten Auswerteeinheit, wobei das erste Umfeldbild und das zweite Umfeldbild zumindest einen großen Überlappungsbereich aufweisen, und wobei die erste Auswerteeinheit zur Erkennung einer kritischen Bremssituation aus dem ersten Umfeldbild und die zweite Auswerteeinheit zur Erkennung der kritischen Bremssituation aus dem zweiten Umfeldbild ausgebildet ist,
**dadurch gekennzeichnet, dass**
das Fahrzeugsystem (1,1a) dazu ausgebildet ist, bei Erkennung einer kritischen Bremssituation aus dem ersten Umfeldbild eine Bremsung mit einer ersten Bremskraft (6) und bei Erkennung der kritischen Bremssituation aus dem zweiten Umfeldbild eine Bremsung mit einer zweiten Bremskraft (6) zu bewerkstelligen und
bei Erkennung der kritischen Bremssituation aus dem ersten Umfeldbild als auch gleichzeitig aus dem zweiten Umfeldbild eine Bremsung mit einer dritten Bremskraft (7) zu bewerkstelligen,
wobei die dritte Bremskraft (7) höher als die zweite Bremskraft (6) und die erste Bremskraft (6) ist.

2. Fahrzeugsystem (1,1a) nach Anspruch 1, **dadurch gekennzeichnet, dass**
die erste Auswerteeinheit und die zweite Auswerteeinheit zur parallelen Verarbeitung ausgebildet sind, so dass die erste Auswerteeinheit eine vorhandene Bremssituation aus dem ersten Umfeldbild und die zweite Auswerteeinheit die vorhandene Bremssituation aus dem zweiten Umfeldbild parallel erkennt.

3. Fahrzeugsystem (1,1a) nach Anspruch 1 oder 2, **dadurch gekennzeichnet, dass** die erste Bremskraft (6) gleich der zweiten Bremskraft (6) ist.

4. Fahrzeugsystem (1,1a) nach einem der vorhergehenden Ansprüche, **dadurch gekennzeichnet, dass**
das erste Sensorsystem (2) und das zweite Sensorsystem (3) auf unterschiedlichem Messprinzip beruhen.

5. Fahrzeugsystem (1,1a) nach einem der vorhergehenden Ansprüche, **dadurch gekennzeichnet, dass**
das Fahrzeugsystem (1,1a) dazu ausgebildet ist, bei der dritten Bremskraft (7) eine Gefahrenbremsung (5) durchzuführen.

6. Fahrzeugsystem (1,1a) nach Anspruch 5, **dadurch gekennzeichnet, dass**
das Fahrzeugsystem (1,1a) dazu ausgebildet ist, bei einer Gefahrenbremsung (5) eine Gefahrenwarnung auszugeben.

7. Fahrzeugsystem (1,1a) nach einem der vorhergehenden Ansprüche, **dadurch gekennzeichnet, dass**
das Fahrzeugsystem (1,1a) dazu ausgebildet ist, bei Vorliegen einer zweiten Bremskraft (6) oder einer ersten Bremskraft (6) eine Zwangsbremsung (4) durchzuführen.

8. Fahrzeugsystem (1,1a) nach einem der vorhergehenden Ansprüche, **dadurch gekennzeichnet, dass**
das erste Sensorsystem (2) als Radarsensorsystem und das zweite Sensorsystem (3) als Lidarsensorsystem ausgebildet ist.

9. Fahrzeugsystem (1,1a) nach einem der vorhergehenden Ansprüche, **dadurch gekennzeichnet, dass**
ein Diagnosesystem (9) vorgesehen ist, zur Überprüfung der korrekten Funktionsweise des ersten Sensorsystems (2) und des zweiten Sensorsystems (3) und Erstellung einer Diagnose anhand der Überprüfung und wobei das Fahrzeugsystem (1,1a) dazu ausgebildet ist, die Diagnose bei Durchführung einer Bremsung anhand der Erkennung einer Bremssituation durch die beiden Sensorsysteme zu berücksichtigen.

10. Fahrzeugsystem (1,1a) nach Anspruch 9, **dadurch gekennzeichnet, dass**
bei einer Detektion von einer Störung und/oder eines Ausfalls beider Sensorsysteme und bei Feststellen einer kritischen Bremssituation durch zumindest eines der beiden Sensorsysteme (2,3), das Fahrzeugsystem (1,1a) dazu ausgebildet ist, eine Bremsung mit der dritten Bremskraft (7) zu bewerkstelligen.

11. Fahrzeugsystem (1,1a) nach Anspruch 9 oder 10, **dadurch gekennzeichnet, dass** bei einer Detektion von einer Störung und/oder eines Ausfalls eines der beiden Sensorsysteme (2,3) und bei Feststellen einer fehlenden kritischen Bremssituation durch beide Sensorsysteme (2,3), das Fahrzeugsystem (1,1a) dazu ausgebildet ist, eine Bremsung mit der ersten Bremskraft (6) oder zweiten Bremskraft (6) zu bewerkstelligen.

12. Fahrzeugsystem (1,1a) nach Anspruch 9, 10 oder 11, **dadurch gekennzeichnet, dass**
bei einer Detektion von einer Störung und/oder eines Ausfalls eines der beiden Sensorsysteme (2,3) und bei Feststellen einer kritischen Bremssituation durch zumindest das nicht ausgefallene Sensorsystem, das Fahrzeugsystem (1,1a) dazu ausgebildet ist, eine Bremsung mit der dritten Bremskraft (7) zu bewerkstelligen.

13. Fahrzeug mit einem Fahrzeugsystem (1,1a) nach einem der vorhergehenden Ansprüche.

14. Zug mit einem Fahrzeugsystem (1,1a) nach einem der vorhergehenden Ansprüche 1 bis 12.

## Claims

1. Vehicle system (1, 1a) for carrying out braking of a vehicle, the vehicle system (1, 1a) having a first sensor system (2) for detecting a first image of the surroundings of a vehicle and a first evaluation unit for evaluating the first image of the surroundings with regard to a critical braking situation and further having a second sensor system (3), independent of the first sensor system (2), for detecting a second image of the surroundings of the vehicle and a second evaluation unit, wherein the first image of the surroundings and the second image of the surroundings have at least a large overlapping area, and wherein the first evaluation unit is designed to identify a critical braking situation on the basis of the first image of the surroundings and the second evaluation unit is designed to identify the critical braking situation on the basis of the second image of the surroundings,
**characterized in that**
the vehicle system (1, 1a) is designed to perform braking with a first braking force (6) when a critical braking situation is identified on the basis of the first image of the surroundings and to perform braking with a second braking force (6) when the critical braking situation is identified on the basis of the second image of the surroundings and to perform braking with a third braking force (7) when the critical braking situation is identified on the basis of the first image of the surroundings and simultaneously on the basis of the second image of the surroundings,
wherein the third braking force (7) is greater than the second braking force (6) and the first braking force (6).

2. Vehicle system (1, 1a) according to Claim 1, **characterized in that**
the first evaluation unit and the second evaluation unit are designed for parallel processing such that the first evaluation unit identifies an existing braking situation on the basis of the first image of the surroundings and the second evaluation unit identifies the existing braking situation on the basis of the second image of the surroundings in parallel.

3. Vehicle system (1, 1a) according to Claim 1 or 2, **characterized in that** the first braking force (6) is equal to the second braking force (6).

4. Vehicle system (1, 1a) according to one of the preceding claims, **characterized in that**
the first sensor system (2) and the second sensor system (3) are based on different measuring principles.

5. Vehicle system (1, 1a) according to one of the preceding claims, **characterized in that**
the vehicle system (1, 1a) is designed to carry out hazard braking (5) in the event of the third braking force (7).

6. Vehicle system (1, 1a) according to Claim 5, **characterized in that**
the vehicle system (1, 1a) is designed to output a hazard warning in the event of hazard braking (5).

7. Vehicle system (1, 1a) according to one of the preceding claims, **characterized in that**
the vehicle system (1, 1a) is designed to carry out emergency braking (4) in the event a second braking force (6) or a first braking force (6) is present.

8. Vehicle system (1, 1a) according to one of the preceding claims, **characterized in that**
the first sensor system (2) is designed as a radar sensor system and the second sensor system (3) is designed as a lidar sensor system.

9. Vehicle system (1, 1a) according to one of the preceding claims, **characterized in that**
a diagnostic system (9) is provided to check that the first sensor system (2) and the second sensor system (3) are functioning correctly and to produce a diagnosis based on the check and wherein the vehicle system (1, 1a) is designed to take the diagnosis into consideration when carrying out braking based on the identification of a braking situation by the two sensor systems.

10. Vehicle system (1, 1a) according to Claim 9, **characterized in that**
when a fault and/or a failure of both sensor systems is detected and a critical braking situation is ascertained by at least one of the two sensor systems (2, 3), the vehicle system (1, 1a) is designed to perform braking with the third braking force (7).

11. Vehicle system (1, 1a) according to Claim 9 or 10, **characterized in that**
when a fault and/or a failure of one of the two sensor systems (2, 3) is detected and an absent critical braking situation is ascertained by both sensor systems (2, 3), the vehicle system (1, 1a) is designed to perform braking with the first braking force (6) or second braking force (6).

12. Vehicle system (1, 1a) according to Claim 9, 10 or 11, **characterized in that**
when a fault and/or a failure of one of the two sensor systems (2, 3) is detected and a critical braking situation is ascertained by at least the sensor system which has not failed, the vehicle system (1, 1a) is designed to perform braking with the third braking force (7) .

13. Vehicle having a vehicle system (1, 1a) according to one of the preceding claims.

14. Train having a vehicle system (1, 1a) according to one of preceding Claims 1 to 12.

## Revendications

1. Système de véhicule (1,1a) destiné à exécuter un freinage d'un véhicule, le système de véhicule (1,1a) comprenant un premier système capteur (2) destiné à acquérir une première image de l'environnement d'un véhicule et une première unité d'évaluation destinée à évaluer la première image de l'environnement en ce qui concerne une situation de freinage critique, et comprenant en outre un deuxième système capteur (3), indépendant du premier système capteur (2), destiné à acquérir une deuxième image de l'environnement du véhicule, et une deuxième unité d'évaluation, la première image de l'environnement et la deuxième image de l'environnement présentant au moins une grande zone de chevauchement, et la première unité d'évaluation étant conçue pour détecter une situation de freinage critique à partir de la première image de l'environnement et la deuxième unité d'évaluation étant conçue pour détecter la situation de freinage critique à partir de la deuxième image de l'environnement,
**caractérisé en ce que**
le système de véhicule (1,1a) est conçu pour réaliser un freinage avec une première force de freinage (6) lorsqu'une situation de freinage critique est détectée à partir de la première image de l'environnement, et pour réaliser un freinage avec une deuxième force de freinage (6) lorsqu'une situation de freinage critique est détectée à partir de la deuxième image de l'environnement, et pour réaliser un freinage avec une troisième force de freinage (7) lorsqu'une situation de freinage critique est détectée simultanément à partir de la première image de l'environnement et de la deuxième image de l'environnement,
la troisième force de freinage (7) étant supérieure à la deuxième force de freinage (6) et à la première force de freinage (6).

2. Système de véhicule (1,1a) selon la revendication 1, **caractérisé en ce que**
la première unité d'évaluation et la deuxième unité d'évaluation sont conçues pour un traitement parallèle, de sorte que la première unité d'évaluation détecte une situation de freinage existante à partir de la première image de l'environnement et que la deuxième unité d'évaluation détecte en parallèle la situation de freinage existante à partir de la deuxième image de l'environnement.

3. Système de véhicule (1,1a) selon la revendication 1 ou 2, **caractérisé en ce que** la première force de freinage (6) est égale à la deuxième force de freinage (6).

4. Système de véhicule (1,1a) selon l'une quelconque des revendications précédentes, **caractérisé en ce que** le premier système capteur (2) et le deuxième système capteur (3) sont fondés sur un principe de mesure différent.

5. Système de véhicule (1,1a) selon l'une quelconque des revendications précédentes, **caractérisé en ce que** le système de véhicule (1,1a) est conçu pour exécuter un freinage d'urgence (5) avec la troisième force de freinage (7).

6. Système de véhicule (1,1a) selon la revendication 5, **caractérisé en ce que**
le système de véhicule (1,1a) est conçu pour émettre un avertissement de danger lors d'un freinage d'urgence (5).

7. Système de véhicule (1,1a) selon l'une quelconque des revendications précédentes, **caractérisé en ce que** le système de véhicule (1,1a) est conçu pour exécuter un freinage forcé (4) en présence d'une deuxième force de freinage (6) ou d'une première force de freinage (6).

8. Système de véhicule (1,1a) selon l'une quelconque des revendications précédentes, **caractérisé en ce que** le premier système capteur (2) est conçu sous la forme d'un système capteur radar et le deuxième système capteur (3) est conçu sous la forme d'un système capteur lidar.

9. Système de véhicule (1,1a) selon l'une quelconque des revendications précédentes, **caractérisé en ce que**
il est prévu un système de diagnostic (9) destiné à vérifier le bon fonctionnement du premier système capteur (2) et du deuxième système capteur (3) et à établir un diagnostic sur la base de la vérification, et le système de véhicule (1,1a) étant conçu pour prendre en compte le diagnostic lors de l'exécution d'un freinage sur la base de la détection d'une situation de freinage par les deux systèmes capteurs.

10. Système de véhicule (1,1a) selon la revendication 9, **caractérisé en ce que**
en cas de détection d'un dysfonctionnement et/ou d'une défaillance des deux systèmes capteurs et en cas de constatation d'une situation de freinage critique par au moins l'un des deux systèmes capteurs (2,3), le système de véhicule (1,1a) est conçu pour réaliser un freinage avec la troisième force de freinage (7).

11. Système de véhicule (1,1a) selon la revendication 9 ou 10, **caractérisé en ce que**
en cas de détection d'un dysfonctionnement et/ou d'une défaillance de l'un des deux systèmes capteurs (2,3) et en cas de constatation de l'absence d'une situation de freinage critique par les deux systèmes capteurs (2,3), le système de véhicule (1,1a) est conçu pour réaliser un freinage avec la première force de freinage (6) ou la deuxième force de freinage (6).

12. Système de véhicule (1,1a) selon la revendication 9, 10 ou 11, **caractérisé en ce que**
en cas de détection d'un dysfonctionnement et/ou d'une défaillance de l'un des deux systèmes capteurs (2,3) et en cas de constatation d'une situation de freinage critique par au moins le système capteur non défaillant, le système de véhicule (1,1a) est conçu pour réaliser un freinage avec la troisième force de freinage (7).

13. Véhicule comprenant un système de véhicule (1,1a) selon l'une quelconque des revendications précédentes.

14. Train comprenant un système de véhicule (1,1a) selon l'une quelconque des revendications 1 à 12.
